# EUROPEAN PATENT SPECIFICATION

(11) **EP 4 403 796 B1**
(45) Date of publication and mention of the grant of the patent: **06.08.2025**
(21) Application number: 23152621.1
(22) Date of filing: 20.01.2023
(51) Int. Cl.: F16H 3/10, F16H 37/02, B60K 1/00, F16H 7/02, F16H 7/06

(54) **TRANSMISSION SYSTEM FOR A VEHICLE AND AN ELECTRIC VEHICLE COMPRISING A TRANSMISSION SYSTEM**
GETRIEBESYSTEM FÜR EIN FAHRZEUG UND ELEKTROFAHRZEUG MIT EINEM GETRIEBESYSTEM
SYSTÈME DE TRANSMISSION POUR UN VÉHICULE ET VÉHICULE ÉLECTRIQUE COMPRENANT UN SYSTÈME DE TRANSMISSION

(43) Date of publication of application: 24.07.2024
(73) Proprietor: Volvo Car Corporation, 405 31 Göteborg (SE)
(72) Inventor: SILVA PEREIRA, Luiz Filipe, 40531 Göteborg (SE)
(74) Representative: Maiwald GmbH

(56) References cited:
- DE-A1- 102019 132 224
- US-A1- 2011 088 509

## Description

The present invention as claimed in claims 1 and 14 relates to a transmission system for a vehicle and an electric vehicle comprising a transmission system.

One common goal when designing drive systems is to optimize their driving efficiency. Transmission systems of vehicles contribute to the drive system efficiency vastly. A design option in a transmission system is providing a multiple-speed gearbox, which allows usage of smaller electric machines/motors, as well as optimization of efficiencies. An example differential gear is disclosed in DE102019132224. The differential gear is a part of a drive with a multi-stage manual gearbox. An electric motor is provided with the differential gear on a drive axle. The manual gearbox has an intermediate shaft for each gear stage, which is radially spaced from the drive axle and is arranged stationary parallel thereto. Spur gears of the manual transmission can be coupled to the respective intermediate shaft by means of independently shiftable single-acting multi-plate clutches. Nevertheless, DE102019132224 does not disclose a transfer of rotational movement between the spur gears that simplifies the transmission construction by reducing a number of required transfer members. Whereas, it is advantageous to provide a transmission system that is as compact as an equivalent single speed transmission system with multiple gear stages. Such improvements may also provide reduction of mechanical losses in the drive systems of the vehicle.

Hence, there may be a need for providing an improved transmission system, which may have a compact construction and provide a higher driving efficiency.

The problem is at least partially solved or alleviated by the subject matter of the independent claims of the present disclosure, wherein particular embodiments of the invention as claimed in claim 1 are incorporated in the dependent claims.

According to a first aspect of the invention, as claimed in claim 1, there is provided a transmission system for a vehicle. The transmission system comprises a first gear assembly, a second gear assembly, an intermediate unit and an output gear assembly with an output shaft. The intermediate unit comprises a first sprocket element, a second sprocket element and a coupling element. The first sprocket element is connectable to an input shaft of a traction motor of the vehicle in an axial direction of the first sprocket element to receive an input torque. The second sprocket element is arranged radially to the first sprocket element and in communication with the first sprocket element through the coupling element to receive the input torque. The first gear assembly is connectable to the second sprocket element coaxially to convert the input torque to a first output torque. The second gear assembly is connectable to the first sprocket element coaxially to convert the input torque to a second output torque. The output gear assembly is configured to selectively transfer the first output torque from the first gear assembly to the output shaft or the second output torque from the second gear assembly to the output shaft.

A transmission system, may act as a medium for transmitting a power generated by an engine/electric motor to at least a wheel of a vehicle via a mechanical system of gears or gear trains constituting a gear assembly. For instance, the transmission system may be a gear box. The transmission system may contribute to efficient driving of a vehicle by enabling controlling of the output torque delivered to the wheels based on the drive needs such as required torque/speed. For transferring of the engine/motor torque, also called input torque, at different levels, transmission systems may comprise gears with different gear ratios. By allowing switching between the different gears the output torque provided to the wheels of the vehicle can be changed to fit the drive needs.

The transmission system according to the present invention as claimed in claim 1 provides a compact design by arranging the first gear assembly in connection with the second gear assembly via the coupling element of the intermediate unit. Further, the arrangement of the first gear assembly and the second gear assembly being selectively connectable with the output gear assembly simplifies a change between the first output torque and the second output torque without requiring further transfer elements, such as more gears or gear couples. Accordingly, the torque transfer pathway between the input shaft and the output gear assembly is reduced to a minimum number of components. Thereby, the transmission system as claimed in claim 1 improves an efficiency in transferring torque and reducing mechanical losses.

The transmission system provides the above-mentioned advantages by the special arrangement of the intermediate unit as a central element of the transmission system. The intermediate unit comprising the coupling element that is in connection with the first sprocketelement and the second sprocket element, enables the input torque to be transferred through the first gear assembly or the second gear assembly to the output gear assembly. The input torque of the traction motor of the vehicle may be received by the first sprocket element. The received torque may be transferred through the second gear assembly to obtain the second output torque. Alternatively, the input torque can be transferred through the coupling element to the second sprocket element, which may be connected to the first gear assembly, and can be obtained as the first output torque. Accordingly, the intermediate unit may provide a connection between the first and the second gear assembly to easily switch between the alternative torque pathways.

The first sprocket element, also called driving sprocket, may receive the input torque from the input shaft of the traction motor. The first sprocket element and the input shaft are connectable in an axial direction. For instance, they may share a central axis or their axes may be shifted but extending in parallel to each other. The first and the second sprocket elements may have a form of a simple sprocket-wheel as widely known in the technical field of gears, such as a profiled wheel with teeth that mesh with a chain, belt, track or other perforated or indented material. The traction motor may be powered by electricity to generate power for the wheels of the vehicle. The input shaft may extend out of the traction motor and convey input torque to the wheels via the transmission system and other components such as a drive shaft/driving shaft and differential. The input torque may be transferred to the second sprocket element, called driven sprocket, arranged radially to the first sprocket element through the coupling element of the intermediate member. Radial may mean that the first and the second sprocket elements may be arranged side by side on a plane passing through their centers. The first sprocket element and the second sprocket element may be spaced apart from each other that their connection may be provided only by the coupling element of the intermediate unit. This may be defined by the terms "in communication", which may indicate that the second sprocket element may be moved by the first sprocket element only through the coupling element, as the first and the second sprocket elements may not directly contact each other.

By having two different sprocket elements the torque transfer to the output shaft of the output gear assembly can take place from two torque transfer pathways; namely through the first gear assembly or the second gear assembly. In the former, the first gear assembly may be connected to the second sprocket element coaxially to convert the input torque to a first output torque. Coaxial may mean that a common axis passes through a center of the first gear assembly and the second sprocket element. Accordingly, their central axes may be referred to as aligned.

For transferring the input torque to the output shaft of the output gear assembly, alternative to the first gear assembly, the second gear assembly may be selected. In this case, the second gear assembly is connected to the first sprocket element coaxially to convert the input torque to the second output torque. In other words, the first sprocket element is aligned with the second gear assembly at a common central axis passing through a centre points of each. In this case, the input torque is directly transferred from the first sprocket element to the second gear assembly and from there to the output gear assembly, without being transferred to the second sprocket element through the intermediate unit. In this case, the second sprocket element is still in contact with the first sprocket element and the rotational motion of the first sprocket element is still transferred to the second sprocket element. Nevertheless, the output gear assembly selectively transfers only the second output torque from the second gear assembly. Accordingly, in this case, the first output torque is not transferred to the output gear assembly.

Accordingly, the first output torque can be transferred from the first gear assembly to the output shaft or the second output torque can be transferred from the second gear assembly to the output shaft, selectively. More specifically, the first gear assembly may be adapted to engage with the output gear assembly, while the second gear assembly is disengaged from the output gear assembly, which allows transmitting of the input torque to the output torque as the first output torque. Alternatively, the second gear assembly may be adapted to engage with the output gear assembly, while the first gear assembly is disengaged from the output gear assembly, which allows transmitting of the input torque to the output torque as the second output torque. Thus, the transmission system may provide different torque outputs depending on the selected torque transfer pathway.

In an embodiment of the invention as claimed in claim 1, the first gear assembly comprises a first pinion element engaged with the output gear assembly in a circumferential direction of the output gear assembly, and/or the second gear assembly comprises a second pinion element engaged with the output gear assembly in a circumferential direction of the output gear assembly. In other words, the first and the second pinion elements and the output gear assembly may engage with each other from their peripheries. The first pinion element may be arranged coaxially with the second sprocket element, and between the second sprocket element and the output gear assembly to transfer a rotational motion of the second sprocket element to the output gear assembly. The second pinion element may be arranged axially with the first sprocket element, and between the first sprocket element and the output gear assembly to transfer a rotational motion of the first sprocket element to the output gear assembly. Accordingly, the first pinion element may be connectable to the second sprocket element and the second pinion element may be connectable to the first sprocket element.

The engagement of the first and the second pinion elements to the output gear assembly may allow a selective transfer of the input torque coming from the first or the second sprocket elements. The rotational motion of the pinion elements and the output gear assembly may be in opposite directions. The rotational motion of the first pinion element and the second pinion element may be in the same direction. Accordingly, the input torque may be transferred from the first sprocket element to the second pinion element or from the second sprocket element to the first pinion element, and therefrom to the output gear assembly. By connecting the two torque pathways via two separate pinion elements to the same output gear assembly, a simplified construction may be provided.

In an embodiment of the invention as claimed in claim 1, the first gear assembly comprises a first clutch member coaxial to the second sprocket element. The first clutch member is configured to cause a delivery of the first output torque when being activated. By activating the first clutch member, the first clutch member may engage to the first pinion element to transfer a rotational movement of the second sprocket element to the first pinion element. The rotational movement of the second sprocket element may originate from the motor/engine of the vehicle and may be transferred by the input shaft, the first sprocket element and the coupling element to the first pinion element.

The first clutch member may be for instance a one-way clutch. Of course, the first clutch member may be any other kind of clutch, such as a friction clutch. A one-way clutch may transfer rotation in one way only. The first clutch member may be fixed to the second sprocket element. Fixing of the first clutch member to the second sprocket element may be via a fastening element such as a bolt or a screw. The first clutch member may be splined to the second sprocket element and fixed by a locking element such as a snap ring. The second sprocket element may be alternatively integrally formed with the first clutch member. In other words, the second sprocket element and the first clutch member may be monolithic. Of course any other method for fixing the first clutch member to the second sprocket element may be preferred.

In a further embodiment of the invention as claimed in claim 1, the first clutch member may comprise a strut element arranged to prevent disengaging of the first gear assembly and/or the second gear assembly from the output gear assembly. This may be especially preferred when the vehicle is costing down.

In an embodiment of the invention as claimed in claim 1, the second gear assembly comprises a second clutch member at a side of the second pinion element opposite to the first sprocket element and the second clutch member is configured to cause a delivery of the second output torque when being activated. Activation of the second clutch member may mean to cause a transfer of a rotational movement of the first sprocket element to the second pinion element. The second clutch member may be for instance a friction clutch.

The second clutch member may be in an embodiment of the invention as claimed in claim 1, a dry clutch, comprising multiple friction elements. In this case, the second clutch member may be exposed to reduced viscous drag torque between the friction elements. In other words, the viscous drag torque may be nearly around zero. In this example, the second clutch member, the second pinion element and the first sprocket element may have a common central axis passing through the centers of each second clutch member, second pinion element and first sprocket element. Such a one-stage construction of the second gear assembly may minimize losses as well as reduce a space occupied.

In an embodiment of the invention as claimed in claim 1, the second sprocket element comprises a recess facing the first pinion element, for receiving the first clutch member therein. In other words, the recess may be on a side of the second sprocket element in a direction of the first pinion element. Accordingly, the recess may be constructed to a size suitable for the first clutch member to be placed therein. The first clutch member may have a shape of a disc and the recess may have a circular shape and a thickness extending into the second sprocket element for enclosing the disc shaped first clutch member at least partially. Nevertheless, the first clutch member may have any other shape and the recess may be designed accordingly to at least partially enclose the first clutch member. The recess may comprise a through hole concentric with the second sprocket element. This construction of the second sprocket element and the first clutch member may provide an axially compact arrangement and further reduce the occupied space.

According to the invention as claimed in claim 1, the coupling element is a chain or a belt circumscribing the first sprocket element and the second sprocket element. As mentioned previously, the coupling element allows a transfer of rotational movement from the first sprocket element to the second sprocket element. A sprocket and chain or belt combination provides the transfer without any slippage or with reduced slippage during rotation. Using a coupling element of such sort allows the first and the second sprocket elements to rotate in the same direction. Obtaining the same rotational direction from the first and the second sprocket element simplifies the transmission construction by reducing a number of required transfer members, such as further gear assemblies. Accordingly, the coupling element may have a higher efficiency and may contribute to the reduction of mechanical losses.

In an embodiment of the invention as claimed in claim 1, the first sprocket element and the second sprocket element have different diameters. Accordingly, the first and the second output torque may be different to each other. The first sprocket element may be smaller in size than the second sprocket element. Alternatively, the second sprocket element may be smaller in size than the second sprocket element. Thus the motor or electric machine capacity may be used optimally without overloading thereof.

In an embodiment of the invention as claimed in claim 1, the second clutch member comprises a carrier element and an elastic element. The elastic element is arranged on the carrier element at a side opposite to the second pinion element. The carrier element may securely hold the elastic element in place. The carrier element may additionally provide an enclosure for the friction elements to be stored therein. The elastic element may be a diaphragm spring. The diaphragm spring may be pre-stressed and apply a positive force to the carrier element when activated. When the diaphragm spring is inactivated, the spring may be released and return to its original shape. Arranging the elastic element at a side opposite to the second pinion element may counterweight a force (load) accumulated on the side of the carrier element. Accordingly, high stiffness on this side may be balanced.

In an embodiment of the invention as claimed in claim 1, the first gear assembly comprises a first coupling shaft extending coaxially to the second sprocket element. A central axis of the recess of the second sprocket element may be coaxial with a central axis of the first coupling shaft. The first coupling shaft may be a lay shaft of the transmission system. The first coupling shaft may be a shaft which is configured to accommodate the second sprocket element and the first gear assembly and provide a central axis thereto. The first coupling shaft may not directly connect to the output shaft to provide the output torque. It may rather be understood as an intermediary component of the transmission system. The first coupling shaft may rotatably extend through the central axis of the second sprocket element. The through hole of the recess of the second sprocket element may be aligned with the first coupling shaft for it to extend therethrough.

In an embodiment of the invention as claimed in claim 1, the first gear assembly comprises a first convey shaft concentric to the first coupling shaft. The first pinion element is mounted on the first convey shaft. In this embodiment, the first clutch member is configured to cause the first convey shaft to engage with the first coupling shaft, thereby converting the input torque to the first output torque, when activated. Accordingly, the first clutch member may be configured to secure the first convey shaft to the first coupling shaft when activated, for the first convey shaft and the first coupling shaft to rotate together.

In an embodiment of the invention as claimed in claim 1, the second gear assembly comprises a second coupling shaft extending coaxially to the first sprocket element. The first sprocket element may comprise a concentrically extending second through hole for the input shaft to rotatably extend therethrough. The second coupling shaft may concentrically extend from the second clutch member towards the first sprocket element.

In an embodiment of the invention as claimed in claim 1, the input shaft is arranged concentrically inside the second coupling shaft. The input shaft may be freely rotatable inside the second coupling shaft when the second clutch member is not activated. The second clutch may cause the input shaft to engage with the second coupling shaft when activated, therefore not allowing the input shaft to freely rotate inside the second coupling shaft. In this embodiment, the second pinion element is mounted on the second coupling shaft. The second clutch member is configured to cause the input shaft to engage with the second coupling shaft, thereby converting the input torque to the second output torque, when activated.

In this embodiment, the first pinion element and/or the second pinion element may be engaged to the output gear assembly permanently. In other words, the first pinion element and/or the second pinion element may be attached to the output gear assembly without needing to be separated therefrom. The first clutch member and/or the second clutch member may be configured to cause a delivery of the first or the second output torque, respectively, independent of if the first or the second pinion elements are engaged to the output gear assembly.

For instance, when the second clutch member becomes inactive, this may mean that the input torque from the first sprocket element may not be delivered to the second pinion element and thus no second output torque may be delivered. The first clutch member may be activated, for instance automatically, to deliver the first output torque by delivering the input torque from the second sprocket element via the first pinion element. More specifically, when the second clutch member is activated, it may cause an increase in an output speed of the first clutch member, for instance through a rotational speed of the first pinion element, compared to the output speed when the first clutch member is activated. The increased output speed of the first clutch member may exceed an input speed received at the second sprocket element. The output speed of the first clutch member being higher than the input speed may cause an automatic disconnection of the first clutch member. Accordingly, with the disconnection of the first clutch member, torque may not be transferred through the first gear assembly.

Whereas, when the second clutch member disengages from the second pinion element by deactivation, the output speed of the first clutch member may fall below the input torque. Accordingly the first clutch member may become automatically activated. In principle, when the output speed is higher than the input speed, no output torque may be transmitted through the respective clutch member. On the other hand, if the input speed is higher than the output speed, the clutch member may stay connected with the input, for instance being in connection with the input shaft. This can be considered as if the first clutch member overruns the second clutch member by engaging with the first pinion element directly.

In yet another embodiment of the invention as claimed in claim 1, the previously explained transmission system may additionally comprise a locking means at the first gear assembly to prevent the first clutch member from disengaging from the first pinion element. By keeping the first clutch member engaged to the first pinion element, a reverse torque may be transferred to the input shaft for generating energy by the traction motor. In this embodiment, the first gear assembly may comprise at least a second strut element. By engaging the second strut element, a neutral mode may be prevented when the vehicle is not accelerating.

Engaging the first clutch member with the first pinion element may be through engaging the first convey shaft and the first coupling shaft. Similarly, engaging the second clutch member with the second pinion element may be through engaging the second coupling shaft with the input shaft. Accordingly, possible energy losses that may be caused by the first pinion element and/or the second pinion element engaging/disengaging to/from the output gear assembly may be prevented.

In an embodiment of the invention as claimed in claim 1, the second coupling shaft is concentrically engaged with the carrier element. Concentric engagement of the second coupling shaft to the carrier element may limit a movement of the second coupling shaft in an axial direction thereof as well. Engagement here may mean fixation. Fixing the second coupling shaft and the carrier element in an axial direction and directly to each other may prevent usage of an axial bearing therebetween for holding of a release force applied to the elastic element, and thereby reducing losses.

In an embodiment of the invention as claimed in claim 1, a central axis of the first coupling shaft is arranged in parallel to a central axis of the second coupling shaft. The central axis may be understood as a longitudinal axis of each shaft. The first coupling shaft and the second coupling shaft being independent to each other may enable an efficient power shifting while providing advanced shifting comfort.

In an embodiment of the invention as claimed in claim 1, the output gear assembly may comprise a single gear concentrically connectable to the output shaft. The gear of the output gear assembly may have a bigger diameter than the first and the second sprocket elements and/or the first and the second pinion elements. Of course, the diameter of the gear of the output gear assembly may be smaller or having the same diameter as the first and the second sprocket elements and/or the first and the second pinion elements. The gear of the output gear assembly may be connected to the output shaft via a bearing element.

According to a second aspect of the invention, as claimed in claim 14, there is provided an electric vehicle comprising a transmission system according to the first aspect.

According to an unclaimed aspect, there may be provided a torque transmission method using a transmission system for a vehicle. The method may comprise,
- connecting a first sprocket element to an input shaft of a traction motor of the vehicle in an axial direction of the first sprocket element to receive an input torque,
- arranging a second sprocket element radially to the first sprocket element and in communication with the first sprocket element through a coupling element of an intermediate unit to receive the input torque,
- selectively transferring a first output torque from a first gear assembly to an output shaft of an output gear assembly or a second output torque from a second gear assembly to the output shaft of the output gear assembly,

in case of transferring the first output torque to the output shaft, connecting a first gear assembly coaxially to the second sprocket element to convert the input torque to the first output torque,
in case of transferring the second output torque to the output shaft, connecting a second gear assembly coaxially to the first sprocket element to convert the input torque to the first output torque.

Examples of the invention as claimed in claim 1 will be described in the following with reference to the following drawings.
- Fig. 1: shows schematically and exemplarily an embodiment of a transmission system 10 for a vehicle, according to the invention as claimed in claim 1.
- Fig. 2: shows schematically and exemplarily a cross-sectional detail of a first gear assembly 1 of the transmission system 10, according to the invention as claimed in claim 1.
- Fig. 3: shows schematically and exemplarily a cross-sectional detail of a second gear assembly 2 of the transmission system 10, according to the invention as claimed in claim 1.

The figures are merely schematic representations and serve only to illustrate examples of the invention as claimed in claims 1 and 14. Identical or equivalent elements are in principle provided with the same reference signs.

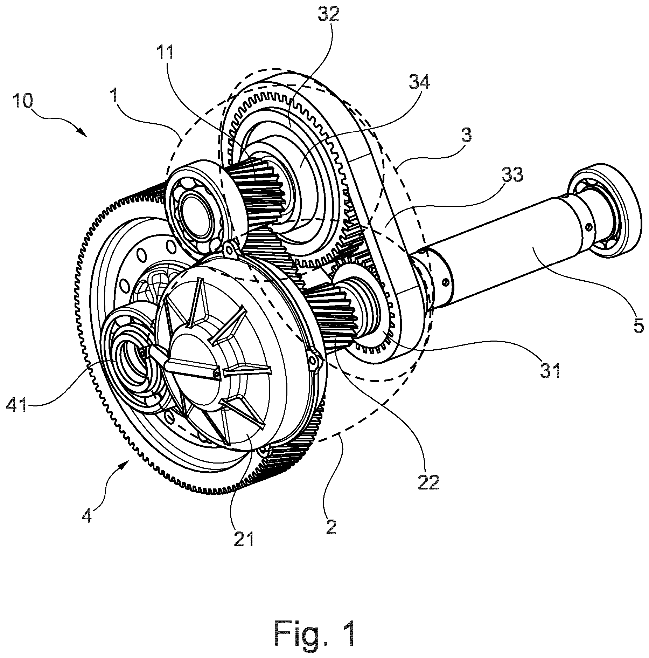

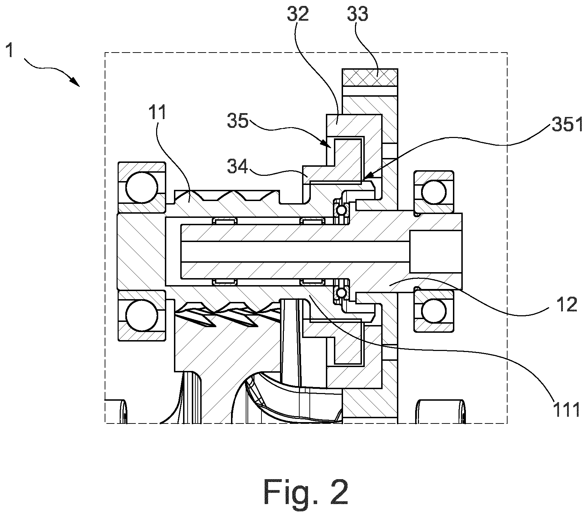

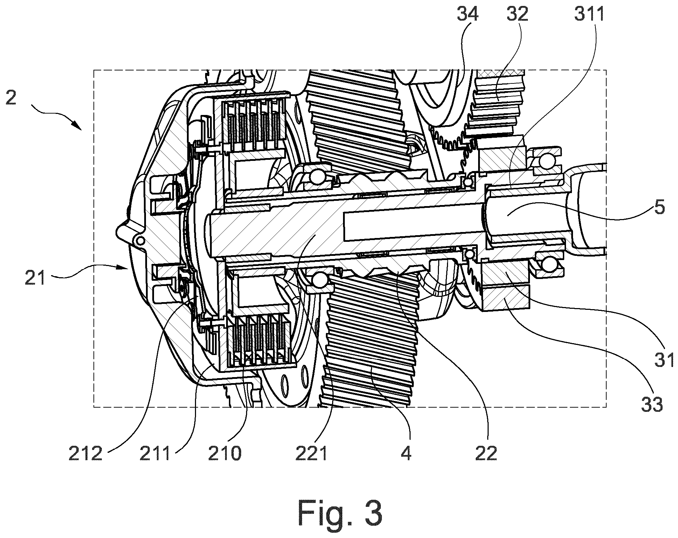

Figure 1 shows schematically and exemplarily an embodiment of a transmission system 10 for a vehicle (not illustrated). The transmission system 10 comprises a first gear assembly 1, a second gear assembly 2, an intermediate unit 3 and an output gear assembly 4 with an output shaft 41. The intermediate unit 3 comprises a first sprocket element 31, a second sprocket element 32 and a coupling element 33. A central axis of the first coupling shaft 111 is arranged in parallel to a central axis of the second coupling shaft 221 (shown in Figures 2 and 3).

The first sprocket element 31 and the second sprocket element 32 are spaced apart from each other that their connection is provided only through the coupling element 33 of the intermediate unit 3. The first and the second sprocket elements 31, 32 have a form of a profiled wheel with teeth that mesh with a teethed surface the coupling element 33, which is depicted as a belt circumscribing the first sprocket element 31 and the second sprocket element 32. The first sprocket element 31 and the second sprocket element 32 have different diameters. More specifically, the first sprocket element 31 is smaller in size than the second sprocket element 32. The first sprocket element 31 is connectable to an input shaft 5 of a traction motor of the vehicle (not illustrated) in an axial direction of the first sprocket element 31 to receive an input torque. The second sprocket element 32 is arranged radially to the first sprocket element 31 and in communication with the first sprocket element 31 through the coupling element 33 to receive the input torque.

By having two different sprocket elements 31, 32 the torque transfer to the output shaft 41 of the output gear assembly 4 can take place from two torque transfer pathways; namely through the first gear assembly 1 or the second gear assembly 2. More specifically, the first gear assembly 1 is connectable to the second sprocket element 32 coaxially to convert the input torque to a first output torque and the second gear assembly 2 is connectable to the first sprocket element 31 coaxially to convert the input torque to a second output torque. The first output torque and the second output torque are different to each other. The output gear assembly 4 is configured to selectively transfer the first output torque from the first gear assembly 1 to the output shaft 41 or the second output torque from the second gear assembly 2 to the output shaft 41.

The first gear assembly 1 comprises a first pinion element 11 engaged with the output gear assembly 4 in a circumferential direction of the output gear assembly 4 and the second gear assembly 2 comprises a second pinion element 22 engaged with the output gear assembly 4 in a circumferential direction of the output gear assembly 4. Accordingly, the first pinion element 11 may be connectable to the second sprocket element 32 and the second pinion element 22 may be connectable to the first sprocket element 31. As shown in Figure 1, the first gear assembly 1 further comprises a first clutch member 34 coaxially positioned at the second sprocket element 32 from one side and attachable to the first pinion element 11 from another side. The first clutch member is configured to cause a delivery of the first output torque when being activated. The first clutch member 34 is best seen in Figure 2 and will be described in more detail in the following paragraphs.

Figure 2 shows schematically and exemplarily a cross-sectional detail of the first gear assembly 1 of the transmission system 10. The input torque may be transferred from the first sprocket element 31 (not shown in Figure 2) via the coupling element 33 to the second sprocket element 32. The first pinion element 11 may be connectable to the second sprocket element 32, such that the input torque may be transferred from the second sprocket element 32 to the first pinion element 11, and therefrom to the output gear assembly 4.

The second sprocket element 32 comprises a recess 35 facing the first pinion element 11, for receiving the first clutch member 34 therein. Accordingly, the recess may be constructed to a size suitable for the second sprocket element to be placed therein. In Figure 2, the first clutch member 34 has a shape of a disc and the recess has a circular shape and a thickness extending into the second sprocket element 32 for enclosing the disc shaped first clutch member 34 at least partially. The recess 35 comprises a through hole 351 concentric with the second sprocket element 32.

In Figure 2, the first gear assembly 1 comprises a first coupling shaft 12 extending coaxially to the second sprocket element 32. A central axis of the recess 35 of the second sprocket element 32 is coaxial with a central axis of the first coupling shaft 12. The first coupling shaft 12 is depicted as a lay shaft of the transmission system 10. The first coupling shaft 12 accommodates the second sprocket element 32 and provides a central axis to the first gear assembly 1. The through hole 351 of the recess is aligned with the first coupling shaft 12 for it to rotatably extend therethrough. The through hole 351 and the first coupling shaft 12 comprise grooves on the former and matching splines on the latter, for the splines to engage with the grooves to make the second sprocket element 32 rotate with the first coupling shaft 12 (not shown in the Figures).

As shown in Figure 2, the first gear assembly 1 further comprises a first convey shaft 111 concentric to the first coupling shaft 12. The first pinion element 11 is mounted on the first convey shaft 111 at an end of the first convey shaft away from the second sprocket element 32. The first clutch member 34 may be configured to cause the first convey shaft 111 to engage with the first coupling shaft 12, thereby converting the input torque to the first output torque, when activated. Accordingly, the first clutch member 34 is configured to secure the first convey shaft 111 to the first coupling shaft 12 when activated, for the first convey shaft 111 and the first coupling shaft 12 to rotate together.

Figure 3 shows schematically and exemplarily a cross-sectional detail of the second gear assembly 2. The second gear assembly 2 is connectable to the first sprocket element 31 coaxially to convert the input torque to a second output torque. The input torque received from the first sprocket element 31 may be transferred through the second gear assembly 2 to obtain the second output torque. The first sprocket element 31 is aligned with the second gear assembly 2 at a common central axis passing through a centre point of each.

The second gear assembly 2 comprises a second clutch member 21 at a side of the second pinion element 22 opposite to the first sprocket element 31. The second clutch member 21, the second pinion element 22 and the first sprocket element 31 have a common central axis. The second clutch member 21 may be configured to cause a delivery of the second output torque when being activated. The second clutch member 21 is depicted as a dry friction clutch comprising multiple friction elements 210 inside a carrier element 211. An elastic element 212 is arranged on the carrier element 211 at a side opposite to the second pinion element 22. The elastic element 212 is depicted as a diaphragm spring.

As shown in Figure 3, the second gear assembly 2 comprises a second coupling shaft 221 extending coaxially to the first sprocket element 31. The second coupling shaft 221 is concentrically engaged with the carrier element 211 of the second clutch member 21. The input shaft 5 is arranged concentrically inside the second coupling shaft 221. The first sprocket element 31 comprises a concentrically extending second through hole 311 for the input shaft 5 to rotatably extend therethrough. The input shaft 5 is freely rotatable inside the second coupling shaft 221 when the second clutch member 21 is not activated (inactive). The second pinion element 22 is mounted on the second coupling shaft 221. The second clutch member 21 may be configured to cause the second coupling shaft 221 to engage with the input shaft 5, thereby converting the input torque to the second output torque, when activated.

### LIST OF REFERENCE SIGNS

- 10: Transmission system
- 1: First gear assembly
- 11: First pinion element
- 111: First convey shaft
- 12: First coupling shaft
- 2: Second gear assembly
- 21: Second clutch member
- 210: Friction elements
- 211: Carrier element
- 212: Elastic element
- 22: Second pinion element
- 221: Second coupling shaft
- 3: Intermediate unit
- 31: First sprocket element
- 311: Second through hole
- 32: Second sprocket element
- 33: Coupling element
- 34: First clutch member
- 35: Recess
- 351: Through hole
- 4: Output gear assembly
- 41: Output shaft
- 5: Input shaft

## Claims

1. A transmission system (10) for a vehicle, comprising,
- a first gear assembly (1),
- a second gear assembly (2),
- an intermediate unit (3) comprising a first sprocket element (31), a second sprocket element (32), and a coupling element (33),
- an output gear assembly (4) with an output shaft (41),
the first sprocket element (31) being connectable to an input shaft (5) of a traction motor of the vehicle in an axial direction of the first sprocket element (31) to receive an input torque,
the second sprocket element (32) being arranged radially to the first sprocket element (31) and in communication with the first sprocket element (31) through the coupling element (33) to receive the input torque,
the first gear assembly (1) being connectable to the second sprocket element (32) coaxially to convert the input torque to a first output torque,
the second gear assembly (2) being connectable to the first sprocket element (31) coaxially to convert the input torque to a second output torque, and
the output gear assembly (4) being configured to selectively transfer the first output torque from the first gear assembly (1) to the output shaft (41) or the second output torque from the second gear assembly (2) to the output shaft (41), **characterized in that** the coupling element (33) is a chain or a belt circumscribing the first sprocket element (31) and the second sprocket element (32).

2. The transmission system (10) according to claim 1, the first gear assembly (1) comprising a first pinion element (11) engaged with the output gear assembly (4) in a circumferential direction of the output gear assembly (4) and/or the second gear assembly (2) comprising a second pinion element (22) engaged with the output gear assembly (4) in a circumferential direction of the output gear assembly (4).

3. The transmission system (10) according to claim 2, the first gear assembly (1) comprising a first clutch member (34) coaxial to the second sprocket element (32), the first clutch member (34) may be any kind of clutch, for example a one-way clutch or a friction clutch, the first clutch member (34) being configured to cause a delivery of the first output torque when being activated.

4. The transmission system (10) according to claim 2, the second gear assembly (2) comprising a second clutch member (21) at a side of the second pinion element (22) opposite to the first sprocket element (31) and the second clutch member being configured to cause a delivery of the second output torque when being activated.

5. The transmission system (10) according to claim 3, the second sprocket element (32) comprising a recess (35) facing the first pinion element (11), for receiving the first clutch member (34) therein.

6. The transmission system (10) according to any of the previous claims, the first sprocket element (31) and the second sprocket element (32) having different diameters.

7. The transmission system (10) according to claim 4, the second clutch member (21) comprising a carrier element (211) and an elastic element (212), the elastic element (212) being arranged on the carrier element (211) at a side opposite to the second pinion element (22).

8. The transmission system (10) according to any of the previous claims, the first gear assembly (1) comprising a first coupling shaft (12) extending coaxially to the second sprocket element (32).

9. The transmission system (10) according to claim 8, the first gear assembly (1) further comprising a first convey shaft (111) concentric to the first coupling shaft (12), the first pinion element (11) being mounted on the first convey shaft (111), the first clutch member (34) being configured to cause the first convey shaft (111) to engage with the first coupling shaft (12), thereby converting the input torque to the first output torque, when activated.

10. The transmission system (10) according to any of the previous claims, the second gear assembly (2) comprising a second coupling shaft (221) extending coaxially to the first sprocket element (31).

11. The transmission system according to claim 10 the input shaft (5) being arranged concentrically inside the second coupling shaft (221), the second pinion element (22) being mounted on the second coupling shaft (221), and the second clutch member (21) being configured to cause the input shaft (5) to engage with the second coupling shaft (221), thereby converting the input torque to the second output torque, when activated.

12. The transmission system according to claim 10, when dependent on claim 7, the second coupling shaft (221) being concentrically engaged with the carrier element (211).

13. The transmission system according to claim 10, when dependent on claim 8, a central axis of the first coupling shaft (12) being arranged in parallel to a central axis of the second coupling shaft (221).

14. An electric vehicle comprising a transmission system (10) according to any of the previous claims 1 to 13.

## Patentansprüche

1. Ein Getriebesystem (10) für ein Fahrzeug, umfassend,
- eine erste Getriebebaugruppe (1),
- eine zweite Getriebebaugruppe (2),
- eine Zwischeneinheit (3), die ein erstes Kettenradelement (31), ein zweites Kettenradelement (32) und ein Kupplungselement (33) umfasst,
- eine Abtriebsgetriebebaugruppe (4) mit einer Abtriebswelle (41),
wobei das erste Kettenradelement (31) mit einer Eingangswelle (5) eines Fahrmotors des Fahrzeugs in einer axialen Richtung des ersten Kettenradelements (31) verbindbar ist, um ein Eingangsdrehmoment aufzunehmen,
wobei das zweite Kettenradelement (32) radial zum ersten Kettenradelement (31) angeordnet ist und über das Kupplungselement (33) mit dem ersten Kettenradelement (31) in Verbindung steht, um das Eingangsdrehmoment aufzunehmen,
wobei die erste Getriebebaugruppe (1) mit dem zweiten Kettenradelement (32) koaxial verbindbar ist, um das Eingangsdrehmoment in ein erstes Ausgangsdrehmoment umzuwandeln,
wobei die zweite Getriebebaugruppe (2) koaxial mit dem ersten Kettenradelement (31) verbindbar ist, um das Eingangsdrehmoment in ein zweites Ausgangsdrehmoment umzuwandeln, und
wobei die Abtriebsgetriebebaugruppe (4) dazu ausgestaltet ist, wahlweise das erste Ausgangsdrehmoment von der ersten Getriebebaugruppe (1) auf die Abtriebswelle (41) oder das zweite Ausgangsdrehmoment von der zweiten Getriebebaugruppe (2) auf die Abtriebswelle (41) zu übertragen, **dadurch gekennzeichnet, dass** das Kupplungselement (33) eine Kette oder ein Riemen ist, die bzw. der das erste Kettenradelement (31) und das zweite Kettenradelement (32) umgibt.

2. Das Getriebesystem (10) nach Anspruch 1, wobei die erste Getriebebaugruppe (1) ein erstes Ritzelelement (11) umfasst, das mit der Abtriebsgetriebebaugruppe (4) in einer Umfangsrichtung der Abtriebsgetriebebaugruppe (4) in Eingriff steht, und/oder wobei die zweite Getriebebaugruppe (2) ein zweites Ritzelelement (22) umfasst, das mit der Abtriebsgetriebebaugruppe (4) in einer Umfangsrichtung der Abtriebsgetriebebaugruppe (4) in Eingriff steht.

3. Das Getriebesystem (10) nach Anspruch 2, wobei die erste Getriebebaugruppe (1) ein erstes Kupplungselement (34) umfasst, das koaxial mit zum zweiten Kettenradelement (32) ist, wobei das erste Kupplungselement (34) jegliche Art von Kupplung, beispielsweise eine Einwegkupplung oder eine Reibkupplung, sein kann, wobei das erste Kupplungselement (34) dazu ausgestaltet ist, bei Aktivierung eine Abgabe des ersten Ausgangsdrehmoments zu bewirken.

4. Das Getriebesystem (10) nach Anspruch 2, wobei die zweite Getriebebaugruppe (2) ein zweites Kupplungselement (21) an einer dem ersten Kettenradelement (31) abgewandten Seite des zweiten Ritzelelements (22) umfasst und das zweite Kupplungselement dazu ausgestaltet ist, bei Aktivierung eine Abgabe des zweiten Ausgangsdrehmoments zu bewirken.

5. Das Getriebesystem (10) nach Anspruch 3, wobei das zweite Kettenradelement (32) eine dem ersten Ritzelelement (11) zugewandte Aussparung (35) zur Aufnahme des ersten Kupplungselements (34) umfasst.

6. Das Getriebesystem (10) nach einem der vorhergehenden Ansprüche, wobei das erste Kettenradelement (31) und das zweite Kettenradelement (32) unterschiedliche Durchmesser aufweisen.

7. Das Getriebesystem (10) nach Anspruch 4, wobei das zweite Kupplungselement (21) ein Trägerelement (211) und ein elastisches Element (212) umfasst, wobei das elastische Element (212) auf einer dem zweiten Ritzelelement (22) abgewandten Seite am Trägerelement (211) angeordnet ist.

8. Das Getriebesystem (10) nach einem der vorhergehenden Ansprüche, wobei die erste Getriebebaugruppe (1) eine erste Kupplungswelle (12) umfasst, die koaxial zum zweiten Kettenradelement (32) verläuft.

9. Das Getriebesystem (10) nach Anspruch 8, wobei die erste Getriebebaugruppe (1) ferner eine erste Übertragungswelle (111) umfasst, die konzentrisch zur ersten Kupplungswelle (12) ist, wobei das erste Ritzelelement (11) auf der ersten Übertragungswelle (111) montiert ist und wobei das erste Kupplungselement (34) dazu ausgestaltet ist, bei Aktivierung die erste Übertragungswelle (111) mit der ersten Kupplungswelle (12) in Eingriff zu bringen und dadurch das Eingangsdrehmoment in das erste Ausgangsdrehmoment umzuwandeln.

10. Das Getriebesystem (10) nach einem der vorhergehenden Ansprüche, wobei die zweite Getriebebaugruppe (2) eine zweite Kupplungswelle (221) umfasst, die koaxial zum ersten Kettenradelement (31) verläuft.

11. Das Getriebesystem nach Anspruch 10, wobei die Eingangswelle (5) konzentrisch innerhalb der zweiten Kupplungswelle (221) angeordnet ist, das zweite Ritzelelement (22) auf der zweiten Kupplungswelle (221) montiert ist und das zweite Kupplungselement (21) so ausgestaltet ist, bei Aktivierung die Eingangswelle (5) mit der zweiten Kupplungswelle (221) in Eingriff zu bringen und dadurch das Eingangsdrehmoment in das zweite Ausgangsdrehmoment umzuwandeln.

12. Das Getriebesystem nach Anspruch 10, soweit rückbezogen auf Anspruch 7, wobei die zweite Kupplungswelle (221) konzentrisch mit dem Trägerelement (211) in Eingriff steht.

13. Das Getriebesystem nach Anspruch 10, soweit rückbezogen auf Anspruch 8, wobei eine Mittelachse der ersten Kupplungswelle (12) parallel zu einer Mittelachse der zweiten Kupplungswelle (221) angeordnet ist.

14. Ein Elektrofahrzeug, das ein Gertiebesystem (10) nach einem der vorhergehenden Ansprüche 1 bis 13 umfasst.

## Revendications

1. Système de transmission (10) pour un véhicule, comprenant :
- un premier ensemble engrenage (1),
- un second ensemble engrenage (2),
- une unité intermédiaire (3) comprenant un premier élément de roue dentée (31), un second élément de roue dentée (32) et un élément d'accouplement (33),
- un ensemble engrenage de sortie (4) avec un arbre de sortie (41),
le premier élément de roue dentée (31) pouvant être relié à un arbre d'entrée (5) d'un moteur de traction du véhicule dans une direction axiale du premier élément de roue dentée (31) pour recevoir un couple d'entrée,
le second élément de roue dentée (32) étant disposé radialement par rapport au premier élément roue dentée (31) et en communication avec le premier élément roue dentée (31) par l'intermédiaire de l'élément d'accouplement (33) pour recevoir le couple d'entrée,
le premier ensemble engrenage (1) pouvant être relié au second élément de roue dentée (32) de manière coaxiale pour convertir le couple d'entrée en un premier couple de sortie,
le second ensemble engrenage (2) pouvant être relié au premier élément de roue dentée (31) de manière coaxiale pour convertir le couple d'entrée en un second couple de sortie, et
l'ensemble engrenage de sortie (4) étant configuré pour transférer sélectivement le premier couple de sortie du premier ensemble engrenage (1) à l'arbre de sortie (41) ou le second couple de sortie du second ensemble engrenage (2) à l'arbre de sortie (41), **caractérisé en ce que** l'élément d'accouplement (33) est une chaîne ou une courroie entourant le premier élément de roue dentée (31) et le second élément de roue dentée (32).

2. Système de transmission (10) selon la revendication 1, le premier ensemble engrenage (1) comprenant un premier élément de pignon (11) en prise avec l'ensemble engrenage de sortie (4) dans une direction circonférentielle de l'ensemble engrenage de sortie (4) et/ou le second ensemble engrenage (2) comprenant un second élément de pignon (22) en prise avec l'ensemble engrenage de sortie (4) dans une direction circonférentielle de l'ensemble engrenage de sortie (4).

3. Système de transmission (10) selon la revendication 2, le premier ensemble engrenage (1) comprenant un premier élément d'embrayage (34) coaxial au second élément de roue dentée (32), le premier élément d'embrayage (34) pouvant être n'importe quel type d'embrayage, par exemple un embrayage unidirectionnel ou un embrayage à friction, le premier élément d'embrayage (34) étant configuré pour provoquer une délivrance du premier couple de sortie lorsqu'il est activé.

4. Système de transmission (10) selon la revendication 2, le second ensemble engrenage (2) comprenant un second élément d'embrayage (21) sur un côté du second élément de pignon (22) opposé au premier élément de roue dentée (31) et le second élément d'embrayage étant configuré pour provoquer une délivrance du second couple de sortie lorsqu'il est activé.

5. Système de transmission (10) selon la revendication 3, le second élément de roue dentée (32) comprenant une cavité (35) faisant face au premier élément de pignon (11), pour y recevoir le premier élément d'embrayage (34).

6. Système de transmission (10) selon l'une quelconque des revendications précédentes, le premier élément de roue dentée (31) et le second élément de roue dentée (32) ayant des diamètres différents.

7. Système de transmission (10) selon la revendication 4, le second élément d'embrayage (21) comprenant un élément porteur (211) et un élément élastique (212), l'élément élastique (212) étant disposé sur l'élément porteur (211) sur un côté opposé au second élément de pignon (22).

8. Système de transmission (10) selon l'une quelconque des revendications précédentes, le premier ensemble engrenage (1) comprenant un premier arbre d'accouplement (12) s'étendant coaxialement au second élément de roue dentée (32).

9. Système de transmission (10) selon la revendication 8, le premier ensemble engrenage (1) comprenant en outre un premier arbre de transport (111) concentrique au premier arbre d'accouplement (12), le premier élément de pignon (11) étant monté sur le premier arbre de transport (111), le premier élément d'embrayage (34) étant configuré pour amener le premier arbre de transport (111) à entrer en prise avec le premier arbre d'accouplement (12), convertissant ainsi le couple d'entrée en premier couple de sortie, lorsqu'il est activé.

10. Système de transmission (10) selon l'une quelconque des revendications précédentes, le second ensemble engrenage (2) comprenant un second arbre d'accouplement (221) s'étendant coaxialement au premier élément de roue dentée (31).

11. Système de transmission selon la revendication 10, l'arbre d'entrée (5) étant disposé concentriquement à l'intérieur du second arbre d'accouplement (221), le second élément de pignon (22) étant monté sur le second arbre d'accouplement (221), et le second élément d'embrayage (21) étant configuré pour amener l'arbre d'entrée (5) à entrer en prise avec le second arbre d'accouplement (221), convertissant ainsi le couple d'entrée en second couple de sortie, lorsqu'il est activé.

12. Système de transmission selon la revendication 10, lorsqu'il dépend de la revendication 7, le second arbre d'accouplement (221) étant en prise concentrique avec l'élément porteur (211).

13. Système de transmission selon la revendication 10, lorsqu'il dépend de la revendication 8, un axe central du premier arbre d'accouplement (12) étant disposé parallèlement à un axe central du second arbre d'accouplement (221).

14. Véhicule électrique comprenant un système de transmission (10) selon l'une quelconque des revendications précédentes 1 à 13.
